# FASCICULE DE BREVET EUROPEEN

(11) **EP 2 635 154 B1**
(45) Date de publication et mention de la délivrance du brevet: **26.04.2017**
(21) Numéro de dépôt: 11802473.6
(22) Date de dépôt: 04.11.2011
(51) Int. Cl.: A45D 20/12, H02K 29/14

(54) **SÈCHE-CHEVEUX LÉGER ET PERFORMANT**
LEICHTGEWICHTIGER, EFFIZIENTER HAARTROCKNER
LIGHT, EFFICIENT HAIR DRYER

(30) Priorité: 05.11.2010 FR 1059178
(43) Date de publication de la demande: 11.09.2013
(73) Titulaire: Velecta Paramount SAS, 75015 Paris (FR)
(72) Inventeur: QUESSARD, Roland, 41200 Romorantin-Lanthenay (FR); GUILLOSSON, Michel, 45160 Olivet (FR)
(74) Mandataire: Debay, Yves
(86) Numéro de dépôt international: PCT/FR2011/052581
(87) Numéro de publication internationale: WO 2012/059699

(56) Documents cités:
- CN-Y- 201 398 600
- DE-U1- 8 716 873
- US-A1- 2006 081 586
- US-A1- 2008 116 753

## Description

La présente invention concerne le domaine des sèche-cheveux. La présente invention concerne plus particulièrement un sèche-cheveux léger dont le moyen de soufflage est entrainé par un moteur de type sans balais (brushless en anglais) et alimenté par une alimentation extérieure au boîtier du sèche-cheveux afin de réduire le poids de l'appareil.

Ces dernières années, les troubles musculo-squelettiques (ou TMS) des membres supérieurs sont en forte progression dans le monde de la coiffure. Parmi les causes de ces troubles se trouvent les outils tels que les sèche-cheveux trop lourds. De ce fait, les professionnels de la coiffure sont de plus en plus demandeurs de sèche-cheveux plus légers permettant de concilier poids, puissance et efficacité de séchage.

Il est connu dans l'art antérieur, comme par exemple par la demande de brevet EP 1 103 202 A1, un sèche-cheveux utilisant un moteur de type sans balais. Le moteur enseigné est un moteur équipé d'un capteur de position (sensored en anglais) qui permet de connaître la position du rotor par rapport au stator. La présence de ce capteur à effet Hall augmente le coût du moteur et le risque de panne. Selon ce document, le moteur est alimenté par le courant alternatif délivré par le secteur et redressé par un pont de diodes. Le moteur utilisé est donc un moteur assez lourd. De plus, le sèche-cheveux décrit est un appareil électroménager muni d'une turbine axiale. Le problème de ce genre de turbine est qu'elle ne fournit généralement pas une puissance aéraulique satisfaisante.

Ce sèche cheveux présente donc l'inconvénient d'être lourd et d'avoir une puissance aéraulique insuffisante.

La demande de brevet américaine US 2008/116,753, enseigne le préambule de la revendication 1, et par ailleurs enseigne un sèche-cheveux avec un moteur de type sans balais à rotor interne sans préciser si ce moteur est avec ou sans capteur. Cette demande décrit un sèche-cheveux compact alimenté par un circuit à découpage de phase et détection de zéro placé à l'intérieur du séchoir. Cependant la solution proposée n'est pas sûre. En effet, le signal, après hachage, est redressé, par un pont de diodes, puis filtré, à l'aide d'un condensateur, de façon à obtenir un signal le plus proche possible d'un signal continu. Pour que le signal de sortie soit bien lisse, le circuit nécessitera un condensateur de forte capacité.

Un problème se pose si ce condensateur électrochimique vient à exploser suite à une surtension ou un vieillissement de ce dernier. Du fait de sa forte capacité, l'explosion pourra être violente. De plus cette explosion pourra être accompagnée d'une projection d'électrolyte et/ou de l'enflammement du séchoir. Ceci peut s'avérer très dangereux pour les utilisateurs (par exemple le coiffeur et le client).

La présente invention a pour but de pallier au moins certains inconvénients de l'art antérieur en proposant un sèche-cheveux dont le moteur est stable.

Ce but est atteint par un sèche-cheveux selon la revendication 1. D'autres particularités avantageuses sont exposées dans les revendications dépendantes.

D'autres particularités et avantages de la présente invention apparaîtront plus clairement à la lecture de la description ci-après, faite en référence aux dessins annexés, dans lesquels :
- La figure 1 représente une vue de coupe d'un sèche-cheveux.
- Les figures 2a et 2b représentent, respectivement, une vue éclatée et une vue assemblée d'un moteur de type sans balais selon certains modes de réalisation de l'invention.
- La figure 3 représente un schéma de câblage du circuit électronique commandant un sèche-cheveux.
- La figure 4a présente les modes de fonctionnement d'un interrupteur bipolaire de type tout ou rien utilisé dans certains sèche-cheveux.
- La figure 4b présente les modes de fonctionnement d'un interrupteur bipolaire progressif utilisé dans certains sèche-cheveux.
- La figure 5 représente un schéma bloc d'un circuit d'alimentation d'un sèche-cheveux.

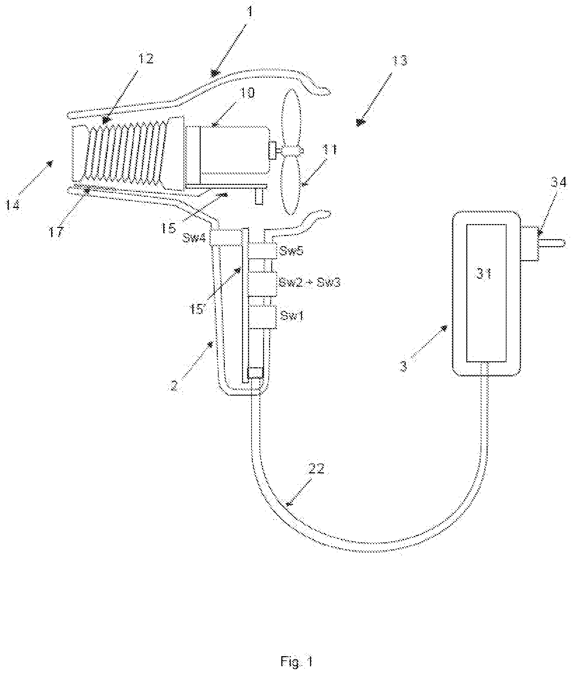

La figure 1 représente un exemple de réalisation d'un sèche-cheveux électrique professionnel. Le sèche-cheveux électrique comporte, de façon connue en soi, un boîtier de sèche-cheveux qui est, par exemple et de façon non limitative, en matériau plastique, et comprend une poignée (2) et un corps (1). On utilise indifféremment les termes séchoir ou sèche-cheveux dans la présente demande pour désigner le même dispositif.

Dans certains modes de réalisation, le corps (1) comprend une entrée (13) et une sortie (14) d'air. Dans le corps (1), est placé un moteur (10), de type sans balais (brushless en anglais), qui entraine un moyen de soufflage (11) qui projette de l'air de l'entrée d'air (13) vers la sortie air (14). De façon préférentielle, le moyen de soufflage sera une turbine centrifuge, de préférence disposée en amont du moteur par rapport au sens de circulation de l'air dans le sèche-cheveux. Un avantage d'une turbine centrifuge, par exemple par rapport à une turbine axiale, est qu'elle est capable de fournir une puissance aéraulique importante, notamment satisfaisant les besoins d'un sèche-cheveux, en particulier un sèche-cheveux professionnel pour lequel il est souvent préférable de disposer d'une plus grande puissance que pour les sèche-cheveux standard. Par exemple, à pression équivalente, la turbine centrifuge permet d'avoir un débit d'air plus important qu'une turbine axiale. De plus, une turbine axiale n'est pas capable de délivrer un flux d'air avec une de pression suffisante même si elle délivre un débit d'air important alors qu'une turbine centrifuge possède une courbe de pression en fonction du débit qui permet d'avoir à la fois une bonne pression et un bon débit. Un débit d'air important, en sortie du sèche-cheveux, est très important pour pouvoir sécher des cheveux rapidement car il faut que le flux d'air sortant du séchoir ait une grande vitesse.

Selon une particularité de l'invention, le moteur utilisé est de type sans balais. Un avantage de ce type de moteur est qu'il a un rendement nettement supérieur à celui d'un moteur à balais, ceci étant dû, en partie, à l'absence de pertes mécaniques et électriques liées aux balais. Un autre avantage des moteurs de type sans balais est leur durée de vie. En effet, la durée de vie des moteurs à balais est liée à la durée de vie des charbons. De ce fait, l'absence des balais, dans les moteurs de type brushless, leur permet une durée de vie quasiment illimitée.

Selon une autre particularité, le moteur de type sans balais sans capteur est un moteur à courant continu. En utilisant un moteur brushless à courant continu, plus léger que certains moteurs connus (comme par exemple celui de la demande EP 1 103 202 A1 décrite dans le préambule), le sèche-cheveux est capable de fournir une bonne puissance aéraulique sans nécessiter de moteur trop lourd et/ou encombrant. Selon divers modes de réalisation avantageux, la tension de ce moteur (10) est basse et de l'ordre de 10 à 80 volts, de préférence 20 à 60, idéalement 42V. Un avantage d'un moteur (10) de type sans balais basse tension par rapport à la tension du secteur, par exemple 230V, est qu'il est plus facile à bobiner. En effet, pour avoir un moteur petit et compact avec une tension de 230V il faudrait utiliser un fil très fin ce qui rendrait le moteur difficile à bobiner et élèverait le prix de revient. En revanche, le fait d'utiliser un moteur brushless est particulièrement avantageux en termes d'efficacité et de poids du sèche-cheveux. En effet, pour avoir la même puissance utile qu'un moteur brushless, un moteur universel nécessiterait un poids de l'ordre du double ou du triple de celui d'un moteur brushless. Par contre, on préfère dans la présente invention utiliser une basse tension qui ne soit pas la plus faible possible car, pour des moteurs à courants continus tels que les moteurs brushless, le choix d'une basse tension se répercute également sur les dimensions et le poids. En particulier, les transistors à effet de champ (mosfet, pour l'anglais « metal-oxide-semiconductor field-effect transistor ») qui font la commutation d'un moteur sans balai, doivent être plus importants et mieux refroidis si la tension utilisée est plus basse (à puissance égale). On choisit donc de préférence dans la présente invention un courant continu avec une basse tension qui n'est pas trop basse de façon à éviter de devoir prévoir des mosfets trop importants. Ainsi, une tension continue de préférence entre 20 et 60, idéalement 42V, est un compromis préféré pour des raisons de taille de composants, de poids et de chauffe.

On comprend de ce qui précède que l'on choisit un moteur sans balai à courant continu pour obtenir un sèche-cheveux puissant avec un poids réduit. On comprend également qu'il faut donc un circuit d'alimentation (31) à courant continu pour alimenter ce moteur. Ce type d'alimentation présente en général l'inconvénient d'être encombrante et lourde, notamment plus qu'un simple transformateur. La présence de cette alimentation à courant continu est donc frein à certains objectifs visés par la présente invention. Ainsi, dans certains modes de réalisation préférés de l'invention, l'alimentation du sèche-cheveux est déportée dans un boîtier d'alimentation extérieur (3) au séchoir de façon à réduire le poids de ce dernier, en plus des avantages déjà signalés dans le préambule de la présente demande, tel que le déport du condensateur améliorant la sécurité. Ce boîtier d'alimentation extérieur (3) comprend le circuit d'alimentation (31) destiné à fournir l'énergie nécessaire au moteur (10) du sèche-cheveux. On obtient un sèche-cheveux léger et performant grâce au moteur brushless dont le circuit d'alimentation ne vient pas contrecarrer les gains de poids (i.e., gain en légèreté) et d'encombrement (i.e., gain de place) obtenus par l'utilisation d'un tel moteur.

D'autre part, dans certains modes de réalisation préférés, le moteur (10) est de type sans capteur (sensorless en anglais). Un avantage d'un moteur (10) de ce type est qu'il ne nécessite pas de système pour connaître la position du rotor par rapport au stator. Ceci permet, par exemple d'économiser un capteur de position et donc de réduire les coûts, ainsi que son poids. Ceci permet également d'éliminer un risque de panne et donc d'éliminer ou réduire des coûts de maintenance.

Ce moteur (10), ne possédant pas de capteur de position, nécessite donc un contrôleur de vitesse (18) spécial afin de commuter l'alimentation de ses phases. A titre d'exemple nullement limitatif, un contrôleur TOSHIBA TB6575FNG pourrait être utilisé. De façon à déterminer la position du rotor, le contrôleur de vitesse (18) va mesurer, sur les trois phases du moteur (10), la force contre électromotrice générée par le déplacement des aimants (63) permanents devant ces bobines (51) et en déduire le moment pour déclencher la commutation des trois phases. Le contrôleur de vitesse (18) nécessite une tension d'alimentation précise. Cette tension d'alimentation sera fournie par un circuit d'alimentation (31) comprenant une alimentation à découpage. De façon préférentielle, le contrôleur de vitesse (18) sera placé au plus près du moteur (10). Le contrôleur de vitesse (18) pourra, par exemple être monté sur une carte de circuit imprimé (15) placée sous le moteur (10).

La présente invention est présentée ici avec un moteur de type sans balais et sans capteur mais pourrait également fonctionner avec un moteur de type sans balais avec capteur. Dans ces modes de réalisation, un contrôleur adapté au moteur de type sans balais avec capteur de position serait utilisé pour commander ledit moteur.

Le circuit d'alimentation (31) est de préférence formé par une alimentation à découpage alimentée par le secteur. Parmi les avantages de l'alimentation à découpage, on peut citer son faible poids et son faible encombrement par rapport aux alimentations linéaires. Ceci est du au fait que le transformateur, de l'alimentation à découpage fonctionne à une fréquence plus élevée que celle du secteur ce qui permet de réduire sa taille et donc son poids. De plus, du fait que la puissance dissipée dans le composant électrotechnique, utilisé en commutation, est plus faible que lorsqu'il est utilisé en mode linéaire, l'alimentation à découpage a également l'avantage de fournir un bien meilleur rendement que les alimentations linéaires. Suivant un exemple de réalisation non limitatif, l'alimentation à découpage est de type ^{«} flyback ^{»} Un avantage d'un tel montage est qu'il nécessite peu de composant et qu'il présente une architecture économique pour les faibles puissances. De plus, les alimentations à découpage permettent de fournir une tension très précise. Or les contrôleurs utilisés, notamment ceux requis par les moteurs brushless sans capteur, nécessitent d'être alimentés par une tension très précise. On comprend donc que l'alimentation à découpage est particulièrement préférée dans le cas de ces moteurs brushless sans capteur.

Les sèche-cheveux comportent généralement au moins un élément chauffant (12), tel qu'au moins une résistance par exemple, pour chauffer l'air soufflé par les moyens de soufflage (11) et faciliter ainsi le séchage grâce au flux d'air chaud obtenu. Le flux d'air est de préférence réchauffé par un élément chauffant parcouru par un courant électrique. L'élément chauffant peut, par exemple, être composé de plusieurs résistances chauffantes pour faire varier la température, par exemple en commutant les résistances par au moins un interrupteur, par exemple un interrupteur à plusieurs positions. Dans certains modes de réalisation détaillés dans la présente demande, la commutation des diverses résistances est rendue dépendante de la vitesse de rotation du moteur. Ces moyens de chauffage ou élément(s) chauffant (12) fonctionne(nt) généralement sur le secteur, c'est-à-dire en courant alternatif. On comprend donc que le sèche-cheveux nécessite deux tensions, une tension continue pour alimenter, entre autre, le moteur (10) et la tension du secteur pour alimenter par exemple l'élément chauffant.

Dans certains modes de réalisation particulièrement avantageux, le circuit d'alimentation est de préférence agencé de sorte que la sortie de l'alimentation et la tension du secteur sont isolées galvaniquement. Cette isolation permet de référencer la tension de sortie par rapport à un des pôles de la tension d'entrée. Ceci permet de s'affranchir d'un fil dans le câble reliant le boîtier d'alimentation (3) et le sèche-cheveux. Ainsi, dans certains modes de réalisation, le signal de sortie du circuit d'alimentation (31) est référencé par rapport à un des pôles du signal d'entrée. Cette particularité permet de n'avoir que trois fils en sortie du circuit d'alimentation, tout en conciliant l'alimentation à courant continu avec l'alimentation secteur. Ceci permet au câble (22), reliant le boîtier d'alimentation extérieur (3) au séchoir de ne posséder que trois fils et donc d'être plus facile à fabriquer (car classiquement utilisé), moins lourd et moins rigide que s'il possédait plus de fils (notamment quatre) comme le nécessiterait une alimentation ne comportant pas ces caractéristiques techniques. De plus, de façon préférentielle, les fils, du câble (22) seront multibrins de façon à ajouter plus de souplesse au câble (22).

On comprend également de ce qui précède que certains modes de réalisation de la présente invention utilisent de préférence une alimentation continue pour alimenter le moteur et le courant du secteur pour alimenter l'élément chauffant (12). Ces deux sources d'alimentation distinctes permettent, de façon avantageuse, de prévoir de couper l'alimentation de l'élément chauffant (12) tout en laissant le moteur (10) sous tension et donc de souffler de l'air froid et non tiède. Certains modes de réalisation profitent de cet avantage des deux alimentations séparées, par exemple comme détaillé ci-après.

Dans certains modes de réalisation, le corps (1) contient également au moins une carte de circuit imprimé (15) comportant les composants électroniques permettant de commander le moteur (10). Cette carte de circuit imprimé peut comporter ou être associée à des moyens de commande. Par exemple, dans certains de ces modes de réalisation, une seconde carte de circuit imprimé (15') est placée dans la poignée (2) du sèche-cheveux permettant au moins de commander le circuit de chauffage et donner les consignes de vitesse au moteur du type sans balais via un ensemble d'interrupteurs placés sur ce circuit (15').

Dans certains modes de réalisation, des moyens de commande du sèche-cheveux sont disposés dans la poignée (2) du sèche-cheveux, ce qui facilite avantageusement leur accès. Ces moyens comprennent au moins un élément de contrôle (SW1, SW2, SW3, SW4, SW5), comme par exemple un interrupteur ou un bouton poussoir, permettant de contrôler au moins une fonction du sèche-cheveux.

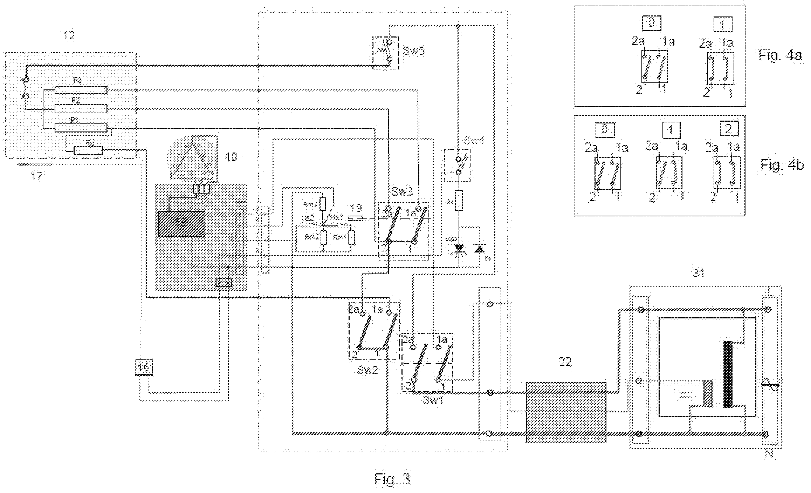

En référence à la figure 3, les moyens de commande, et en particulier l'électronique de commande, utilisés dans certains modes de réalisation du sèche-cheveux va être présentée.

Suivant l'exemple de réalisation présenté figure 3, les moyens de commande comprennent 5 éléments de contrôle, formés par 5 interrupteurs (SW1 à SW5). On comprendra à la lecture de ce qui suit, que l'on prévoir tout ou partie de ces i éléments de contrôle selon que l'on prévoit toute ou partie des fonctions qu'ils contrôlent. De même, on peut prévoir de remplacer ces exemples par des équivalents connus, bien qu'ils soient souvent avantageux comme détaillé ci-après, et donc préférentiellement utilisés. Ainsi, les termes « premier », « deuxième », « troisième », « quatrième » et « cinquième » ne doivent pas être interprétés de façon limitative.

Dans certains modes de réalisation, il est prévu un premier interrupteur (SW1) de type bipolaire fonctionnant en mode ^{«} tout ou rien ^{»}. Cet interrupteur (SW1) permet de mettre le sèche-cheveux sous tension. Lorsque l'interrupteur (SW1) est ouvert, aucun courant ne circule et lorsqu'il est fermé les fils dans lesquels circulent la phase et le courant continu sont reliés électriquement au circuit.

Dans certains modes de réalisation, au moins un interrupteur est prévu pour gérer la température de l'air. Comme mentionné précédemment, dans certains modes de réalisation, on commute la température en fonction de la vitesse de rotation. De préférence, deux interrupteurs SW2 et SW3 sont prévus, comme par exemple des interrupteurs bipolaires fonctionnant suivant un mode progressif. En référence à la figure 4b, ces interrupteurs (SW2, SW3) ont trois positions. Une première position (0) correspond au cas où les deux pôles sont ouverts. La deuxième position (1) correspond au cas où seulement un pôle, le pôle reliant les ports 1 et 1a, est fermé et la troisième position au cas où les deux pôles sont fermés.

Le deuxième interrupteur (SW2) permet de modifier la puissance de l'élément chauffant. Lorsque l'interrupteur (SW2) est ouvert aucun courant ne circule dans l'élément chauffant permettant de souffler de l'air froid. Lorsque seul le premier pôle (1-1a) de l'interrupteur (SW2) est commuté, une résistance (Rc) est mise en série avec les résistances (R1, R2, R3), branchées en parallèle, de l'élément chauffant (12) faisant ainsi chuter sa puissance. Lorsque les deux pôles de l'interrupteur (SW2) sont commutés, la résistance Rc est court-circuitée permettant à un courant plus important de circuler dans l'élément chauffant et donc de produire plus de chaleur.

Le troisième interrupteur (SW3) est formé par un interrupteur bipolaire progressif à trois positions couplé avec un aimant (19) se déplaçant au dessus de deux contacteurs magnétiques, comme par exemple, des Interrupteurs à Lame Souple (ILS ou ampoule Reed). Cette particularité permet de commander simultanément deux interrupteurs bipolaires progressifs sans ressentir une résistance excessive en actionnant le bouton de commande. Ceci permet d'éviter de fatiguer le pouce de l'utilisateur lors du changement de vitesse du séchoir. Un autre avantage de cette configuration, par rapport à une configuration avec deux interrupteurs bipolaires en parallèle, est qu'elle permet de réduire l'encombrement occupé par les deux interrupteurs.

Cet interrupteur (SW3) permet de faire varier la vitesse du moteur (10) du sèche-cheveux tout en commutant simultanément les éléments chauffants pour adapter la chaleur à cette vitesse.

La variation de vitesse du moteur (10) est obtenue en faisant varier la tension aux bornes du contrôleur (18). L'interrupteur (SW3) permet également de moduler le courant traversant l'élément chauffant (12) en fonction de la vitesse choisie. De façon à garder une chaleur constante, lorsqu'une petite vitesse sera choisie, un petit courant traversera l'élément chauffant (12) et lorsqu'une grande vitesse sera choisie, un courant plus important traversera l'élément chauffant (12). Cette modulation du courant est obtenue en faisant varier le nombre de résistance (R₁, R₂, R₃) en parallèle de l'élément chauffant (12).

Une autre particularité de ce montage est de permettre une isolation galvanique entre l'interrupteur (SW3) fonctionnant sous la tension du secteur (par exemple 230V 50Hz ou 120V 60Hz) et la consigne de vitesse du contrôleur (18) fonctionnant sous une basse tension continue, comme par exemple et de façon non limitative, 5V.

Lorsque l'interrupteur (SW3) est en position 0, les deux contacts de l'interrupteur (SW3) sont ouverts et l'aimant (19) est éloigné des deux interrupteurs à lame souple (ILS1, ILS2) qui restent en circuit ouvert. Lorsque l'interrupteur (SW3) est en position 1, seul le premier contact de l'interrupteur (SW3) est fermé et l'aimant (19) est situé au dessus du premier interrupteur à lame souple (ILS1) ce qui permet de fermer son contact, le deuxième interrupteur (ILS2) restant en circuit ouvert. Lorsque l'interrupteur (SW3) est en position 2, les deux contacts de l'interrupteur (SW3) sont fermés et l'aimant (19) se trouve entre les deux interrupteurs à lame souple (ILS1, ILS2) fermant ces deux contacts.

Dans certains modes de réalisation, le séchoir peut également comprendre, à l'intérieur du corps (1), un générateur d'ions négatifs (16, 17) afin de lisser les cheveux. Les ions négatifs générés, permettent de neutraliser l'électricité statique générée au cours du coiffage et/ou du séchage des cheveux. La ou les carte(s) de circuit imprimé pourra (ou pourront) alors comporter, ou être associée(s) à, des moyens de commande pour le générateur d'ions. Par exemple, dans certains modes de réalisation, il est prévu un quatrième interrupteur (SW4) qui est par exemple unipolaire (par exemple, de type poussoir). Une action sur cet interrupteur (SW4) permet de mettre le générateur d'ions (17) sous tension indépendamment des autres éléments. Suivant une variante de réalisation, le générateur d'ions négatifs (16, 17) est en permanence sous tension et une action sur cet interrupteur permet de couper son alimentation afin de réaliser une coiffure plus gonflante. Le générateur d'ions (16, 17) est, par exemple et de façon non limitative, formé par une aiguille (17) alimentée par une alimentation (16) compacte, de petites dimensions et de forte tension, placée à l'intérieur du corps du sèche-cheveux. Suivant un exemple de réalisation nullement restrictif, le générateur d'ions (16, 17) peut, par exemple, être réalisé par une alimentation délivrant une tension d'environ 4 KV au bout d'une aiguille (17).

Une action sur l'interrupteur (SW4) permet également d'alimenter et donc d'illuminer une diode électroluminescente (LED en anglais) servant de lampe témoin pour ce bouton (SW4).

Dans certains modes de réalisation, il est prévu un cinquième interrupteur (SW5) qui est par exemple un interrupteur poussoir de type ^{«} normalement fermé ^{»}. Une action sur cet interrupteur ouvre le circuit d'alimentation de l'élément chauffant permettant de souffler de l'air froid lorsque le moteur est alimenté. Une telle fonction est possible grâce au fait que l'alimentation du moteur (10) du sèche-cheveux est indépendante de l'élément chauffant (12).

En effet, classiquement, les sèche-cheveux, à moteur continu, utilisent, en autre, la ou les résistances de l'élément chauffant pour faire chuter la tension du secteur de façon à alimenter, après redressage et filtrage, ledit moteur. De ce fait, l'élément chauffant est toujours parcouru par un courant lorsque le moteur du sèche-cheveux est en marche et donc cet élément chauffant n'est jamais réellement froid. Avec un tel mode de réalisation, il est impossible de couper l'alimentation de l'élément chauffant sans couper l'alimentation du moteur du sèche-cheveux et donc il est impossible de souffler de l'air totalement froid.

De façon différente, certains modes de réalisation de la présente invention utilise une alimentation continue pour alimenter le moteur et le courant du secteur pour alimenter l'élément chauffant (12), en particulier un circuit d'alimentation (31) extérieur au sèche-cheveux comme indiqué précédemment. Ces deux sources d'alimentation distinctes permettent, de façon avantageuse, de couper l'alimentation de l'élément chauffant (12) tout en laissant le moteur (10) sous tension et donc de souffler de l'air froid et non tiède.

De façon préférentielle, ces moyens de commandes (SW1 à SW5) sont placés sur une carte de circuit imprimé (15') elle-même placée dans la poignée (2) du sèche-cheveux. Bien entendu, d'autres modes de réalisation sont possibles. Dans certains modes de réalisation, ces moyens de commandes pourront être placé dans la poignée (2) et câblés aux éléments à commander. Suivant un autre mode de réalisation, une partie des moyens de commande pourra être placé sur une carte de circuit imprimé et une autre partie câblée aux éléments à commander.

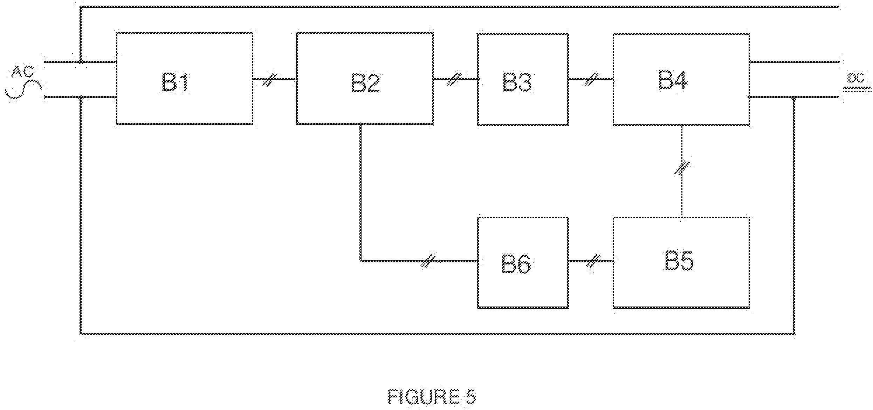

En référence à la figure 5, un circuit d'alimentation (31) basse tension utilisé dans certains modes de réalisation du sèche-cheveux va être présenté. Cette figure représente un schéma bloc d'une alimentation à découpage, que l'on utilise de préférence dans la présente invention comme indiqué et pour les raisons détaillées précédemment.

Un premier bloc de redressement et de filtrage (B1) est alimenté par une tension alternative issue du secteur. Cette tension pourra, par exemple, avoir une valeur efficace de 230V et une fréquence de 50 Hz ou une valeur efficace de 110V et une fréquence de 60Hz. Le signal électrique continu, une fois filtré et redressé, est ensuite découpé dans un bloc de hachage (B2). La tension est ensuite abaissée à l'aide du bloc de transfert d'énergie (B3). Ce bloc est essentiellement composé d'un transformateur. La tension, une fois abaissée est ensuite filtrée et redressée dans un bloc de redressement et de filtrage secondaire (B4). On notera que le bloc de transfert d'énergie (B3) assure également une isolation galvanique entre le bloc de découpage (B2) et celui de redressement et filtrage secondaire (B4) grâce à son transformateur.

Une partie de la tension de sortie est prélevée et passe dans un bloc de comparaison (B5). Ce bloc a pour but de s'assurer que la tension de sortie est bien égale à la tension de sortie souhaitée. Dans le cas où la tension de sortie est différente de celle de la tension de consigne, le bloc (B5) de comparaison envoi un signal au bloc de hachage (B2) afin de moduler le hachage de la tension et ainsi obtenir la tension continue de consigne. Un autre avantage de cette boucle d'asservissement est qu'elle permet d'obtenir la tension de sortie souhaitée quelle que soit la tension appliquée en entrée de l'alimentation à découpage. Ceci permet de réaliser une alimentation internationale sans se soucier de la tension du réseau sur lequel l'alimentation est branchée et sans avoir à déplacer un commutateur sur 230V ou 120V.

Dans certains modes de réalisation, le bloc de comparaison (B5) est isolé du bloc de hachage (B2) par un élément optoélectronique. Cet élément optoélectronique peut être, un optocoupleur comme par exemple, et de façon non limitative, un photo transistor ou un opto triac.

Le circuit d'alimentation est de préférence agencé de sorte que la sortie de l'alimentation et la tension du secteur sont isolées galvaniquement, comme mentionné précédemment. Cette isolation est ici obtenue par le transformateur présent dans le bloc de transfert d'énergie (B3) et par l'élément optoélectronique du bloc d'isolation (B6) de la boucle d'asservissement. L'intérêt de cette particularité est qu'elle permet de référencer la tension de sortie par rapport à un des pôles de la tension d'entrée. Ceci permet de s'affranchir d'un fil dans le câble reliant le boîtier d'alimentation (3) et le sèche-cheveux.

Dans certains modes de réalisation, le moteur de type sans balais (10) est câblé suivant un montage triangle, les bobines sont donc montées en série et présente une impédance forte. Le moteur (10) nécessitera une tension faible et un courant élevé. A titre d'exemple, le moteur (10), suivant un mode de réalisation non restrictif, consomme un courant d'environ 2,4 A pour une tension d'environ 42V. Avec un tel courant, les fils du câble (22) doivent avoir une section d'au moins 0,75 mm². Le fait de pouvoir supprimer un fil, dans le câble (22), permet de réduire considérablement le poids de ce dernier. Cela permet également d'obtenir un câble moins rigide. La suppression d'un conducteur dans le câble (22) permet également d'utiliser un câble couramment utilisé en milieu industriel contrairement à un câble à quatre conducteurs. Ceci a pour effet de réduire le coût du séchoir.

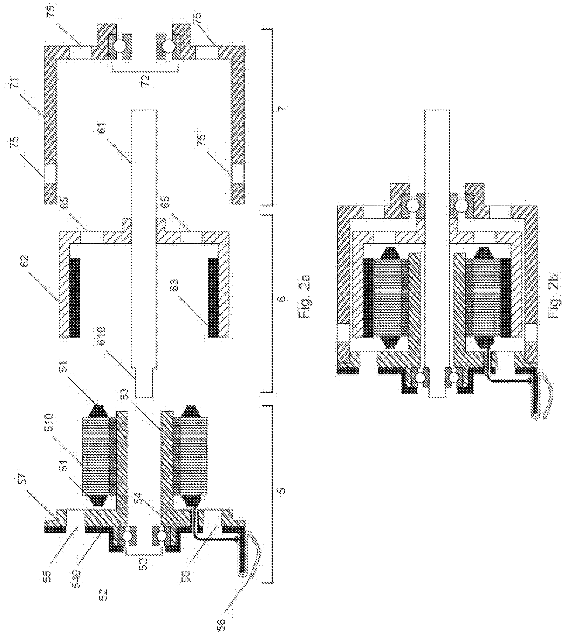

En référence à la figure 2, le moteur électrique (10) de type sans balais utilisé dans certains modes de réalisation va être décrit. Ce moteur (10) comprend un rotor (6) monté en rotation autour d'un stator (5) et un carter (7), en forme de cloche, entourant le stator (5) et le rotor (6).

Dans ces modes de réalisation, le stator (5) comprend un paquet de tôle (510) et différents bobinages (51), formant l'induit, alimentés par un connecteur (56). Suivant un exemple de réalisation nullement restrictif, le stator (5) comprend neuf bobinages (51) répartis équitablement en trois phases. Chaque phase comprend donc 3 bobinages (51) montés en série. Les trois phases pourront, par exemple, être montées suivant un montage triangle comme illustré figure 3 ou suivant un montage étoile. Un avantage du montage triangle est qu'il est plus facile à bobiner car il n'y a pas à raccorder un point milieu. Le paquet de tôle (510) est monté autour d'un tube (53) solidaire d'une platine (54), le tube (53) étant monté perpendiculairement sur ladite platine (54). La platine (54) comporte un connecteur (56) muni de trois contacts, chacun des contacts étant relié à une phase différente du stator. La platine (54) comprend également un roulement (52) recevant l'axe de rotation (61) entrainé par le rotor et rendu solidaire, par une de ses extrémités, de la turbine en amont du moteur. Le roulement (52) est bloqué contre la platine (54) par un isolant (540). Les roulements (52, 72 ci-après) sont par exemple, à billes, ou à aiguilles ou de tout autre type. Le roulement (52) est monté à l'aplomb du tube (53), sur la face, de la platine (54), opposée à celle sur laquelle sont montés les bobinages (51). Suivant un exemple de réalisation, la platine comporte des ouvertures (55) longitudinales traversant l'épaisseur de la platine (54)

Dans certains modes de réalisation, le rotor (6) ou inducteur peut être formé par un élément cylindrique (62), par exemple, en forme de cloche, monté solidairement sur un axe (61), formant l'axe ou l'arbre (61) du moteur (10), passant par l'axe de révolution de l'élément cylindrique (62). Une extrémité de l'arbre moteur (61) est destinée à être insérée dans le roulement (52) placé sur la platine (54) du stator (5). Des aimants permanents (63), par exemple, de forme rectangulaire, sont collés parallèlement à l'axe de rotation, sur la face intérieure de la partie longitudinale de l'élément cylindrique (62) du rotor (6). Ces aimants sont placés de façon à présenter une alternance nord sud. Chaque aimant (63) permanent est identique. Lors de la réalisation, du fait des tolérances sur les dimensions des aimants (63), des aimants de poids légèrement différents pourront être montés. Cette différence de poids va entraîner un balourd sur le rotor. Lors de la rotation le déséquilibre va créer des vibrations entrainant une gêne pour l'utilisateur. De façon à équilibrer le rotor (6) et donc de réduire les gênes occasionnées, des masses d'équilibrage seront placés à l'intérieur du rotor (6).

Dans certains modes de réalisation, l'inducteur comportera 6 aimants (63) permanents espacés régulièrement. L'élément cylindrique (62) pourra également comporter des ouvertures (65) sur une de ces faces radiales formant la cloche.

Dans certains modes de réalisation, une extrémité de l'axe (61) du rotor (6) pourra être décolletée sur une certaine longueur. Dans cet exemple de réalisation le roulement à billes (52), placé sur la platine (54) de l'induit (5), aura un diamètre intérieur inférieur au diamètre de l'arbre pour rendre solidaire l'arbre moteur (61) de la cage intérieure du roulement (52) et permettre ainsi la rotation du rotor (6) par rapport à la cage extérieure du roulement (52) qui est solidaire de la platine (54).

Dans certains modes de réalisation, une fois monté sur l'induit (5), le corps de l'élément cylindrique (62) de l'inducteur (6) ne vient pas en butée sur la platine (54) de l'induit (5) créant ainsi un espace entre ladite platine (54) et l'élément cylindrique (62). Dans cet exemple de réalisation, les ouvertures (75), de la surface latérale de l'élément cylindrique (62), sont réalisées de façon à ce que la position de l'espace corresponde avec la position des ouvertures (75).

Classiquement, les moteurs de type sans balais sont dits à rotor extérieur et ne sont maintenus que par une platine portant le stator, comme par exemple dans la demande US 2008/116,753. Des roulements (52, 72) sont placés au niveau du stator ou induit et l'axe du rotor vient s'emmancher dans ces roulements. Une turbine est ensuite fixée sur le rotor. L'inconvénient de ce montage est que la turbine se trouve en porte à faux ce qui fait que le moindre déséquilibre de la turbine fait vibrer tout l'ensemble. Ceci est très gênant pour l'utilisateur et augmente la pénibilité de son travail.

Dans certains modes de réalisation permettant d'éviter ce porte-à-faux et ainsi d'éviter les problèmes de vibrations, l'axe du moteur est relié au couple induit-inducteur au moins par l'intermédiaire de deux roulements disposés à proximité des extrémités du couple induit-inducteur le long de l'axe de rotation du moteur. De plus, dans certains modes de réalisation, l'induit et l'inducteur sont montés concentriques dans un carter moteur et autour de l'axe du moteur dont l'inducteur est solidaire. Ainsi, il est par exemple prévu un carter (7), par exemple et de façon non restrictive en forme de cloche, assemblé autour du rotor (6). Ce carter vient se monter par l'extrémité libre du carter dans un épaulement périphérique (57) de la platine (54). Au centre de la partie formant le fond du carter, est monté un roulement (72). Ce roulement (72) est destiné à recevoir l'autre extrémité de l'arbre moteur (61). Ce mode de réalisation permet de maintenir radialement le moteur (10) en position, dans le séchoir, sur deux parties au droit des roulements (52,72) ou sur toute la longueur du moteur (10) ce qui ne serait pas possible avec un montage à rotor extérieur. De façon préférentielle, le carter (7) est réalisé en aluminium ou tout autre matériau bon conducteur thermique de façon à dissiper la chaleur du moteur (10). Un autre avantage de l'utilisation de l'aluminium, pour la réalisation du carter (7), est le gain de poids (i.e. gain en légèreté) du à la faible masse volumique de ce matériau. Des ouvertures (75) sont également réalisées dans le carter (7). Ces ouvertures (75) pourront par exemple être réalisées sur la face portant le roulement à billes (72) et/ou sur la partie latérale. Ces ouvertures (75) coopèrent avec les ouvertures (65) du rotor (6) et celles (55) du stator (5) de façon à ce qu'un flux d'air pénètre à l'intérieur du moteur (10) pour le refroidir lorsque le rotor (6) tourne.

On comprend donc de cette description du moteur préférentiellement utilisé dans la présente invention qu'on obtient un agencement de moteur particulièrement avantageux en ce qu'il est stable. En effet, il permet d'éviter le porte-à-faux, ce qui améliore sa stabilité et prolonge sa durée de vie. Un tel agencement étant particulièrement avantageux et n'étant pas dépendant des autres caractéristiques décrites dans la présente demande (notamment le circuit d'alimentation extérieur ou les moyens de commande), on comprend que l'on peut prévoir un sèche-cheveux comprenant un tel agencement du moteur, qu'il comporte ou non les autres moyens ou caractéristiques décrit(e)s ici. Ainsi, l'invention concerne également un sèche-cheveux à moteur brushless dans lequel l'axe du moteur est relié au couple induit-inducteur au moins par l'intermédiaire de deux roulements disposés à proximité des extrémités du couple induit-inducteur le long de l'axe de rotation du moteur. Dans certains modes de réalisation de ce type de sèche-cheveux, l'induit et l'inducteur sont montés concentriques dans un carter moteur et autour de l'axe du moteur dont l'inducteur est solidaire. Par exemple, comme indiqué ci-dessus, Ce moteur (10) comprend un rotor (6) monté en rotation autour d'un stator (5) et un carter (7), en forme de cloche, entourant le stator (5) et le rotor (6). Le stator est monté, par exemple via une platine (54), à l'aide d'un roulement (52) recevant l'axe de rotation (61) entrainé par le rotor et rendu solidaire, par une de ses extrémités, de la turbine en amont du moteur. Le fond du carter est monté sur un roulement, ce qui permet de maintenir radialement le moteur (10) en position, dans le séchoir, sur deux parties au droit des roulements (52,72) ou sur toute la longueur du moteur (10). D'autres variantes découlent sans ambigüité de la description du moteur qui précède.

Dans certains modes de réalisation, l'entrée d'air (13) peut également comporter une grille de façon à éviter que des cheveux ou poussières ne soient aspirés par le séchoir lors de son utilisation.

Dans certains modes de réalisation de l'invention, un prolongateur ou embout (également appelé concentrateur) pourra être monté sur la sortie d'air (14) du sèche-cheveux de façon à canaliser le flux d'air sortant. Un autre avantage d'un embout, sur la sortie d'air du sèche-cheveux, est qu'il permet, en modifiant sa géométrie, de modifier la pression du flux d'air de sortie. Ainsi, en donnant à cet embout la forme optimale, cela permet, pour un débit d'air de sortie donné, d'augmenter la pression de façon optimale.

Dans certains modes de réalisation de l'invention, un prolongateur ou embout (également appelé concentrateur) pourra être monté sur la sortie d'air (14) du sèche-cheveux de façon à canaliser le flux d'air sortant. Un autre avantage d'un embout, sur la sortie d'air du sèche-cheveux, est qu'il permet, en modifiant sa géométrie, de modifier la pression du flux d'air de sortie. Ainsi, en donnant à cet embout la forme optimale, cela permet, pour un débit d'air de sortie donné, d'augmenter la pression de façon optimale.

La présente demande décrit diverses caractéristiques techniques et avantages en référence aux figures et/ou à divers modes de réalisation. L'homme de métier comprendra que les caractéristiques techniques d'un mode de réalisation donné peuvent en fait être combinées avec des caractéristiques d'un autre mode de réalisation à moins que l'inverse ne soit explicitement mentionné ou qu'il ne soit évident que ces caractéristiques sont incompatibles. De plus, les caractéristiques techniques décrites dans un mode de réalisation donné peuvent être isolées des autres caractéristiques de ce mode à moins que l'inverse ne soit explicitement mentionné et les éventuelles adaptations structurelles nécessaires aux combinaisons ou isolement de caractéristiques seront à la portée de l'homme de métier grâce aux considérations fonctionnelles fournies dans la présente demande.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Sèche-cheveux électrique comprenant, d'une part, un boîtier, contenant :
- un élément chauffant (12) électrique
- un moyen de soufflage (11) et,
- un moteur (10) électrique de type sans balais entrainant le moyen de soufflage (11),
ledit moteur (10) du type sans balai comprenant :
un axe moteur (61) entrainant le moyen de soufflage (11),
un couple induit-inducteur formé par :
- un stator (5) muni de bobines (51) et porté par une platine (54), et
- un rotor (6) muni d'aimants (63), solidaire de l'axe moteur (61) et monté en rotation autour du stator (5),
**caractérisé en ce que** le couple stator (5) - rotor (6) est monté de manière concentrique autour de l'axe moteur (61) dans un carter moteur (7) fixé à la platine (54), l'axe moteur (61) étant maintenu radialement par l'intermédiaire de deux roulements (52, 72) disposés réciproquement sur la platine (54) et sur le carter moteur (7), à proximité des extrémités de l'axe moteur (61).

2. Sèche-cheveux selon la revendication 1, **caractérisé en ce que** le carter moteur (7) est en aluminium.

3. Sèche-cheveux selon la revendication 1 ou 2, **caractérisé en ce que** le carter moteur (7), le rotor (6) et le stator (5) sont munis d'ouvertures (75, 65, 55) aptes à coopérer de façon à ce qu'un flux d'air pénètre à l'intérieur du moteur (10) pour le refroidir.

4. Sèche-cheveux selon l'une des revendications 1 à 3, **caractérisé en ce que** le moyen de soufflage (11) est une turbine, de préférence une turbine centrifuge.

5. Sèche-cheveux selon une des revendications 1 à 4, **caractérisé en ce que** le moteur (10) de type sans balais est un moteur de type sans capteur avec un circuit de contrôle (18) déterminant la position du rotor en mesurant le courant induit par les aimants sur les bobinages non alimentés.

6. Sèche-cheveux selon l'une des revendications 1 à 5, **caractérisé en ce qu'**il comprend un circuit d'alimentation (31) comprenant une alimentation à courant continu pour le moteur (10) du type sans balai, ce circuit d'alimentation (31) étant disposé dans un boitier (3) extérieur audit boîtier du sèche-cheveux et reliant électriquement ce dernier au secteur.

7. Sèche-cheveux selon la revendication 6, **caractérisé en ce que** le circuit d'alimentation (31) comprend une alimentation à découpage basse tension.

8. Sèche-cheveux selon une des revendications 6 à 7, **caractérisé en ce que** la tension du secteur et la sortie du circuit d'alimentation (31) sont isolées galvaniquement.

9. Sèche-cheveux selon la revendication 8, **caractérisé en ce que** l'isolation galvanique est faite par au moins un élément optoélectronique.

10. Sèche-cheveux selon une des revendications 8 ou 9, **caractérisé en ce qu'**il est relié électriquement au circuit d'alimentation (31) par un cordon (22) comprenant trois fils grâce à un référencement du signal de sortie continu du circuit d'alimentation (31) par rapport à un des pôles de la tension du secteur.

11. Sèche-cheveux selon une des revendications 6 à 10, **caractérisé en ce qu'**il comporte des moyens de commande permettant de commander au moins le circuit de chauffage (12) et fournir des consignes de vitesse au moteur (10) du type sans balai, dont au moins un interrupteur (SW3) couplé avec un aimant (19) se déplaçant à proximité de contacteurs magnétiques (ILS1, ILS2) de façon à les faire commuter ensemble ou individuellement.

12. Sèche-cheveux selon la revendication 6 à 11, **caractérisé en ce qu'**il comporte et des moyens de commande permettant de commander au moins le circuit de chauffage (12) et fournir des consignes de vitesse au moteur (10) du type sans balai, dont au moins un interrupteur (SW3) permettant de sélectionner une vitesse du moteur (10) et, simultanément, de moduler le courant traversant l'élément chauffant (12) en fonction de la vitesse choisie de façon à conserver une chaleur constante.

13. Sèche-cheveux selon une des revendications 6 à 12 **caractérisé en ce que** le boîtier d'alimentation (3) extérieur comprenant le circuit d'alimentation (31) est agencé pour servir de support au sèche-cheveux.

## Patentansprüche

1. Elektrischer Haartrockner, der einerseits ein Gehäuse umfasst, das Folgendes beinhaltet:
- ein elektrisches Heizelement (12),
- ein Gebläsemittel (11) und
- einen Elektromotor (10) des bürstenlosen Typs, der das Gebläsemittel (11) antreibt,
wobei der genannte Motor (10) des bürstenlosen Typs Folgendes umfasst:
eine Motorwelle (61), die das Gebläsemittel (11) antreibt,
ein Anker-Induktor-Paar, gebildet durch:
- einen Stator (5), ausgestattet mit Spulen (51) und getragen von einer Platte (54), und
- einen Rotor (6), ausgestattet mit Magneten (63), einstückig mit der Motorwelle (61) und um den Stator (5) drehend montiert,
**dadurch gekennzeichnet, dass** das Paar aus Stator (5) und Rotor (6) konzentrisch um die Motorwelle (61) in einem an der Platte (54) befestigten Motorgehäuse (7) montiert ist, wobei die Motorwelle (61) radial durch zwei Rollen (52, 72) gehalten wird, die reziprok an der Platte (54) und am Motorgehäuse (7) in der Nähe der Enden der Motorwelle (61) angeordnet sind.

2. Haartrockner nach Anspruch 1, **dadurch gekennzeichnet, dass** das Motorgehäuse (7) aus Aluminium ist.

3. Haartrockner nach Anspruch 1 oder 2, **dadurch gekennzeichnet, dass** das Motorgehäuse (7), der Rotor (6) und der Stator (5) mit Öffnungen (75, 65, 55) versehen sind, die so zusammenwirken können, dass ein Luftstrom ins Innere des Motors (10) dringt, um ihn zu kühlen.

4. Haartrockner nach einem der Ansprüche 1 bis 3, **dadurch gekennzeichnet, dass** das Gebläsemittel (11) eine Turbine, vorzugsweise eine Zentrifugalturbine ist.

5. Haartrockner nach einem der Ansprüche 1 bis 4, **dadurch gekennzeichnet, dass** der Motor (10) des bürstenlosen Typs ein Motor des sensorlosen Typs ist, mit einem Steuerkreis (18), der die Position des Rotors durch Messen des von den Magneten auf den nichtversorgten Spulen induzierten Stroms bestimmt.

6. Haartrockner nach einem der Ansprüche 1 bis 5, **dadurch gekennzeichnet, dass** er eine Speiseschaltung (31) umfasst, die eine Gleichstromversorgung für den Motor (10) des bürstenlosen Typs umfasst, wobei diese Speiseschaltung (31) in einem Gehäuse (3) außerhalb des Gehäuses des Haartrockners angeordnet ist und diesen elektrisch mit dem Sektor verbindet.

7. Haartrockner nach Anspruch 6, **dadurch gekennzeichnet, dass** die Speiseschaltung (31) eine Niederspannungsschaltversorgung umfasst.

8. Haartrockner nach einem der Ansprüche 6 bis 7, **dadurch gekennzeichnet, dass** die Spannung des Sektors und der Ausgang der Speiseschaltung (31) galvanisch getrennt sind.

9. Haartrockner nach Anspruch 8, **dadurch gekennzeichnet, dass** die galvanische Trennung mit wenigstens einem optoelektronischen Element erzielt wird.

10. Haartrockner nach Anspruch 8 oder 9, **dadurch gekennzeichnet, dass** er elektrisch mit der Speiseschaltung (31) durch ein dreiadriges Kabel (22) verbunden ist, dank einer Referenzierung des stetigen Ausgangssignals der Speiseschaltung (31) mit Bezug auf die Pole der Spannung des Sektors.

11. Haartrockner nach einem der Ansprüche 6 bis 10, **dadurch gekennzeichnet, dass** er Steuermittel zum Steuern wenigstens der Heizstromkreises (12) und zum Liefern von Drehzahlsollwerten zu dem Motor (10) des bürstenlosen Typs umfasst, von denen wenigstens ein mit einem Magnet (19) gekoppelter Unterbrecher (SW3) in der Nähe der magnetischen Schütze (ILS1, ILS2) bewegt werden, um sie zusammen oder individuell umzuschalten.

12. Haartrockner nach den Ansprüchen 6 bis 11, **dadurch gekennzeichnet, dass** er Steuermittel zum Steuern wenigstens des Heizstromkreises (12) und zum Liefern von Drehzahlsollwerten zu dem Motor (10) des bürstenlosen Typs umfasst, von dem wenigstens ein Unterbrecher (SW3) das Wählen einer Motordrehzahl (10) und gleichzeitig das Modulieren des das Heizelement (12) durchfließenden Stroms in Abhängigkeit von der gewählten Drehzahl zulässt, um eine konstante Wärme beizubehalten.

13. Haartrockner nach einem der Ansprüche 6 bis 12, **dadurch gekennzeichnet, dass** das äußere Speisegehäuse (3), das den Speisestromkreis (31) umfasst, als Abstützung zum Tragen des Haartrockners dient.

## Claims

1. Electric hairdryer comprising, on the one hand, a case, containing:
- an electrical heating element (12)
- a blowing means (11) and,
- an electric motor (10) of brushless type driving the blowing means (11),
said motor (10) of brushless type comprising:
a drive shaft (61) driving the blowing means (11),
a field coil-armature couple formed by:
- a stator (5) provided with coils (51) and carried by a support plate (54), and
- a rotor (6) provided with magnets (63), firmly attached to the drive shaft (61) and mounted rotatably about the stator (5),
**characterised in that** the stator (5) - rotor (6) couple is mounted concentrically about the drive shaft (61) in a motor case (7) fixed to the support plate (54), the drive shaft (61) being retained radially by means of two bearings (52, 72) arranged reciprocally on the support plate (54) and on the motor case (7), close to the ends of the drive shaft (61).

2. Hairdryer in accordance with claim 1, **characterised in that** the motor case (7) is made of aluminium.

3. Hairdryer in accordance with claim 1 or 2, **characterised in that** the motor case (7), the rotor (6) and the stator (5) are provided with openings (75, 65, 55) able to cooperate so that an airflow penetrates inside the motor (10) to cool it.

4. Hairdryer in accordance with one of claims 1 to 3, **characterised in that** the blowing means (11) is a turbine, preferably a centrifugal turbine.

5. Hairdryer in accordance with one of claims 1 to 4, **characterised in that** the motor (10) of brushless type is a motor of sensorless type with a control circuit (18) determining the position of the rotor by measuring the current induced by the magnets in the unsupplied coils.

6. Hairdryer according to one of claims 1 to 5, **characterised in that** it comprises a supply circuit (31) comprising a direct current supply for the motor (10) of brushless type, this supply circuit (31) being arranged in a case (3) outside said hairdryer case and electrically connecting the latter to the mains supply.

7. Hairdryer in accordance with claim 6, **characterised in that** the supply circuit (31) comprises a low voltage trip supply.

8. Hairdryer in accordance with one of claims 6 to 7, **characterised in that** the mains voltage and the output of the supply circuit (31) are galvanically isolated.

9. Hairdryer in accordance with claim 8, **characterised in that** the galvanic isolation is effected by at least one optoelectronic element.

10. Hairdryer in accordance with one of claims 8 or 9, **characterised in that** it is electrically connected to the supply circuit (31) by a cable (22) comprising three wires by means of referencing of the continuous output signal of the supply circuit (31) relative to one of the poles of the mains voltage.

11. Hairdryer in accordance with one of claims 6 to 10, **characterised in that** it includes control means permitting control of at least the heating circuit (12) and provision of speed instructions to the motor (10) of brushless type, including at least one circuit breaker (SW3) coupled to a magnet (19) being displaced in the proximity of the magnetic contactors (ILS1, ILS2) so as to cause them to switch together or individually.

12. Hairdryer in accordance with claim 6 to 11, **characterised in that** it includes both control means permitting control of at least the heating circuit (12) and provision of speed instructions to the motor (10) of brushless type, including at least one circuit breaker (SW3) permitting selection of a speed of the motor (10) and, simultaneously, modulation of the current passing through the heating element (12) as a function of the speed selected so as to preserve a constant heat.

13. Hairdryer in accordance with one of claims 6 to 12 **characterised in that** the external supply case (3) comprising the supply circuit (31) is arranged to act as a support for the hairdryer.
